# EUROPEAN PATENT SPECIFICATION

(11) **EP 0 822 135 B1**
(45) Date of publication and mention of the grant of the patent: **28.09.2005**
(21) Application number: 97113235.2
(22) Date of filing: 31.07.1997
(51) Int. Cl.: B62M 23/02

(54) **Electric motor-oparated bicycle**
Durch einen Elektromotor angetriebens Fahrrad
Bicyclette entraînée par moteur électrique

(30) Priority: 31.07.1996 JP 20142296
(43) Date of publication of application: 04.02.1998
(73) Proprietor: YAMAHA HATSUDOKI KABUSHIKI KAISHA, Shizuoka-ken, 438 (JP)
(72) Inventor: Ishikawa, Satoshi, Iwata-Shi, Shizuoka 438 (JP)
(74) Representative: Grünecker, Kinkeldey, Stockmair & Schwanhäusser Anwaltssozietät

(56) References cited:
- EP-A- 0 636 536
- EP-A- 0 712 779
- WO-A-93/11992
- DE-U- 9 416 058
- PATENT ABSTRACTS OF JAPAN vol. 1996, no. 611, 29 November 1996 (1996-11-29) & JP 08 175466 A (SANYO ELECTRIC CO LTD), 9 July 1996 (1996-07-09)

## Description

This invention relates to an electric motor-operated bicycle according to the preamble part of the independent claim 1.

In addition to the self-propelled, motor-operated bicycles, electric motor-operated bicycles with an electric motor for assisting the human drive force have been put to practical use. Such motor-operated bicycles inevitably require a battery mounted thereon.

In consideration of convenience when charging the battery, the battery installing structure should be constituted for easy installation and removal. Also, the battery should not hinder the rider's movement when riding and getting off the bicycle.

Conventionally for example, there has been a structure in which an outer box of generally closed type with a flap lid is located behind the seat tube of the vehicle body so that a battery container may be put into and taken out of the outer box.

However, the conventional structure has disadvantages in that the battery housing structure tends to be large-sized due to its dual construction, and an outer box of a size larger than that of the battery container is separately required. This increases the parts costs and restricts the degree of freedom in the styling design.

EP-A-0 636 536 discloses an electric motor-operated bicycle as indicated above.

It is an objective of the present invention to provide an improved electric motor-operated bicycle as indicated above having a battery container installing-removing structure facilitating with simple technical means a smooth installation and removal of the battery container and simultaneously ensures an always reliable support for said battery container.

According to the present invention this objective is solved by an electric motor-operated bicycle as indicated above, wherein a guide means associates with said tray and comprises a guide member for guiding and supporting said battery container such that the battery container is moved in sliding engagement along said guide member upon installing or removing said battery container into or from said tray.

An enhanced space saving position for said battery container is given when the tray and the guide means are located in a space behind a seat tube, and the battery container is installable and removable along the guide means and the seat tube.

In that case it is advantageous when the guide means is arranged along a rear fender and generally parallel to the seat tube, and that the guide member fits into a guide groove formed in the rear end surface of the battery container.

According to a preferred embodiment of the present invention it is advantageous when a locking mechanism is provided for said battery container and that in its locked state said locking mechanism is adapted to be temporarily unlocked by said battery container during the installation of said battery container and to be locked again after the completion of the installation of said battery container.

Thus, according to a further preferred embodiment of the invention the conventional large-sized outer box is not used. Instead, a small-sized tray and a plate-shaped guide member are used so that the battery container is installed into and removed from the tray by sliding the battery container along the guide member. As a result, the battery container may be smoothly installed into and removed from the vehicle body by the use of simple, small components. This reduces both size and cost of the battery installing-removing structure. Furthermore, since most of the exterior of the battery container is exposed to the outside as an external appearance component which is compact-sized, degree of freedom in styling design of the motor-operated bicycle is increased.

According to another preferred embodiment of the invention, since the battery container is installed in the space behind the seat tube, the installing and removing operations become easy and the battery container does not hinder the riding and getting off movements of the rider.

According to still a further preferred embodiment of the invention, the guide member fits into the guide groove formed on the rear end surface of the battery container. In addition, it is advantageous when the guide formed on the front end surface of the battery container fits into the guide member provided on the seat tube. As a result, the installing and removing operations of the battery container are made more easier along the guide member and the seat tube. At the same time, the battery container is secured more reliably once it is installed.

According to still another preferred embodiment of the invention, the locking mechanism is unlocked by the installing action of the battery container, locked again upon completion of the installing action, and the installed state of the battery container to the tray is locked. This means that the battery container is secured more reliably to minimize looseness and that the battery is prevented form being damaged by vibration while the vehicle is running.

Other preferred embodiments of the present invention are laid down in further dependent claims.

In the following, the present invention is explained in greater detail subject to several embodiments thereof in conjunction with the accompanying drawings, wherein:
- Fig. 1: is a side view of an electric motor-operated bicycle provided with a battery container installing-removing structure of a preferred embodiment;
- Fig. 2A and 2B: show different enlarged cross-sections along the line A-A of fig. 1 illustrating a single rod or two rods, respectively, as said guide means;
- Fig. 3: is a side view of an essential part, partially broken away, of the electric motor-operated bicycle with the battery container installed;
- Fig. 4A to 4D: are side views of the elecric motor-operated bicycle, showing different possibilities of installing and removing actions of the battery container;
- Fig. 5: is a view seen in the direction of the arrow B in Fig. 3;
- Fig. 6: shows an enlarged cross section C-C in Fig. 3;
- Fig. 7: is a front view of the guide member;
- Fig. 8: shows a cross section D-D in fig. 8;
- Fig. 9: is a cross-sectional side view of a locking mechanism;
- Fig. 10: is a side view of the locking mechanism;
- Fig. 11: is cross-sectional views of the locking mechanism showing actions when the battery container is installed and removed;
- Fig. 12: is cross-sectional views of the locking mechanism showing actions when the battery container is installed and removed;
- Fig. 13: is cross-sectional views of the locking mechanism showing actions when the battery container is installed and removed;
- Fig. 14: is cross-sectional views of the locking mechanism showing actions when the battery container is installed and removed; and
- Fig. 15: is cross-sectional views of the locking mechanism showing actions when the battery container is installed and removed.

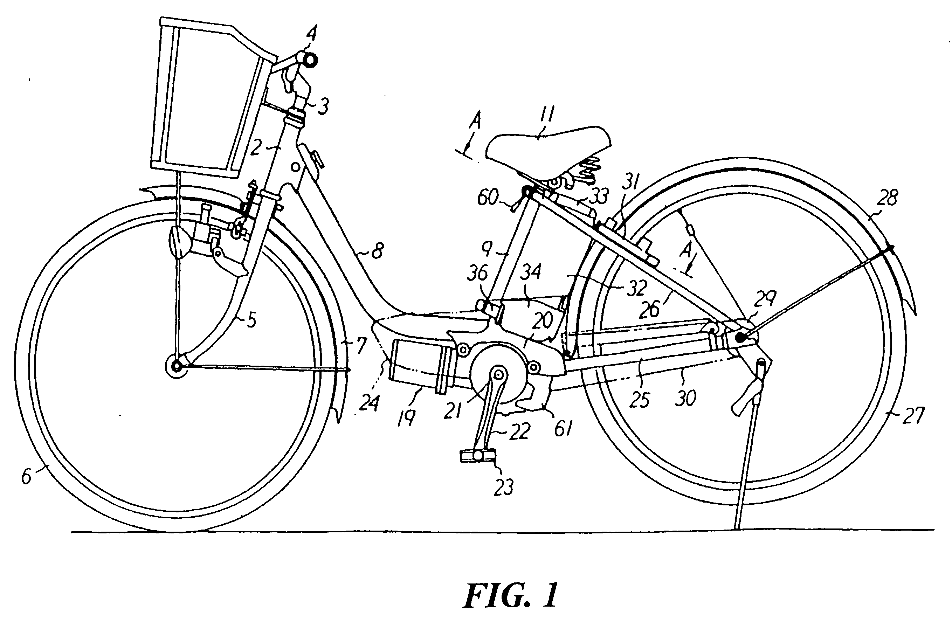

First, the overall constitution of the electric motor-operated bicycle 1 will be described in reference to FIG. 1.

In FIG. 1 are shown; a head pipe 2 located in the front upper part of the vehicle body. A handlebar stem 3 is inserted for free rotation into the head pipe 2. Handlebars 4 are attached to the upper end of the handlebar stem 3. A front fork 5 is attached to the lower end of the handlebar stem 3. A front wheel 6 is attached for free rotation at the lower end of the front fork 5. Part of the front wheel 6 is covered with a front fender 7.

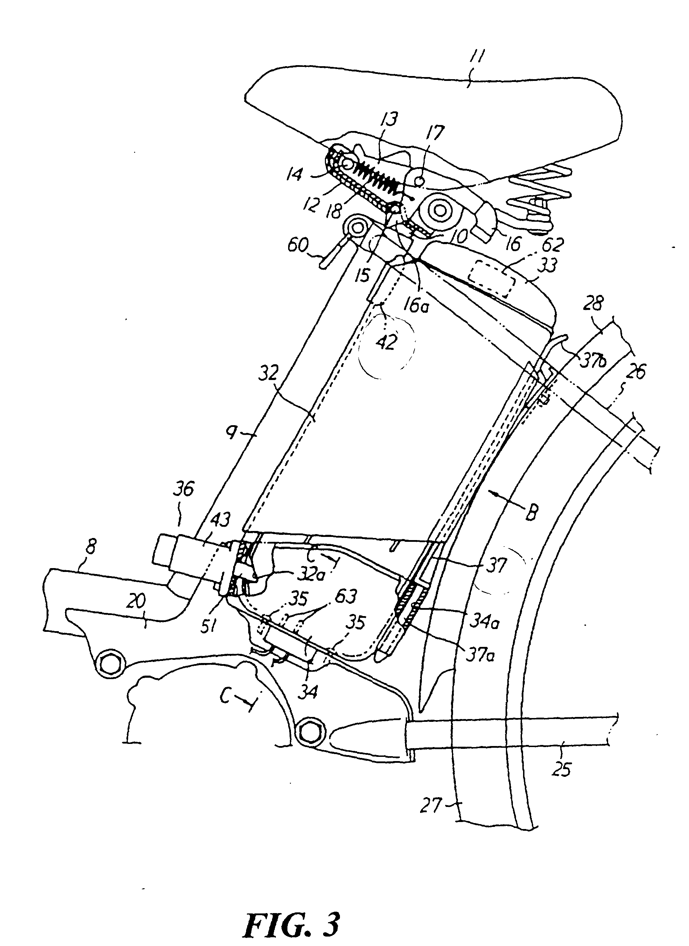

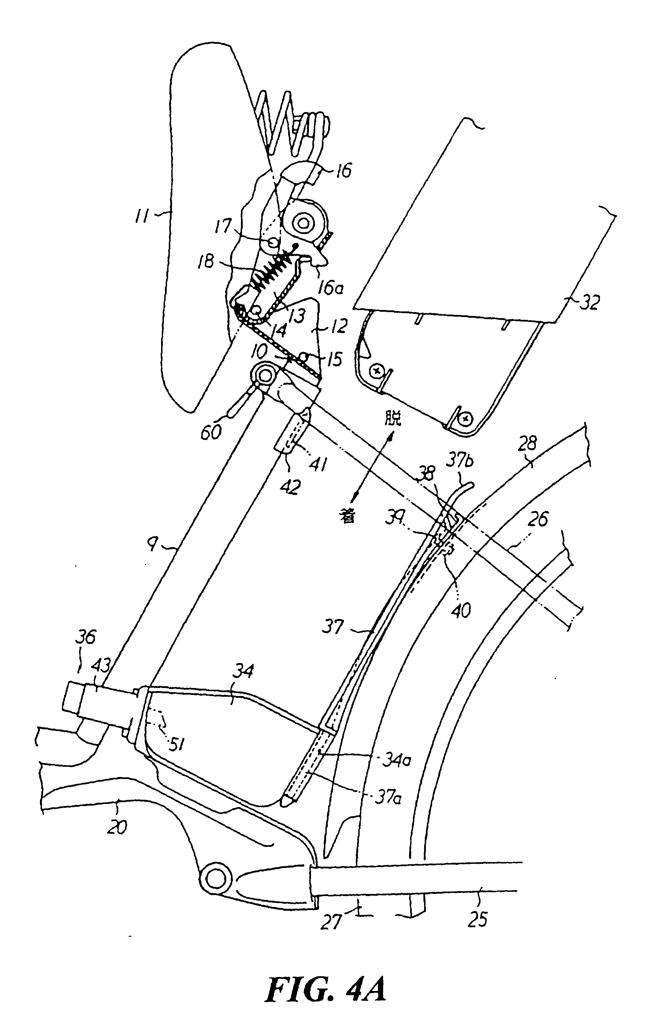

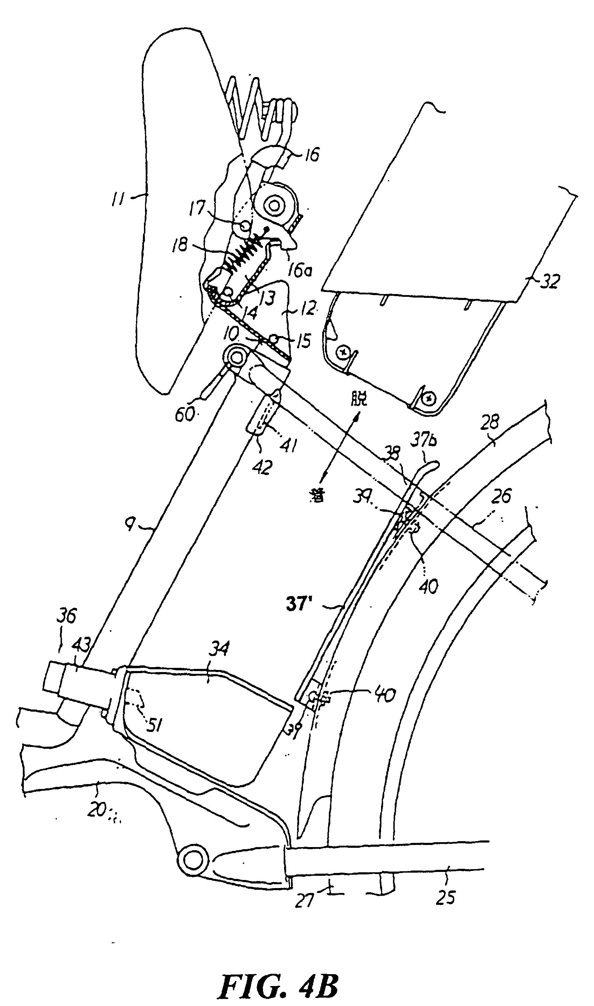

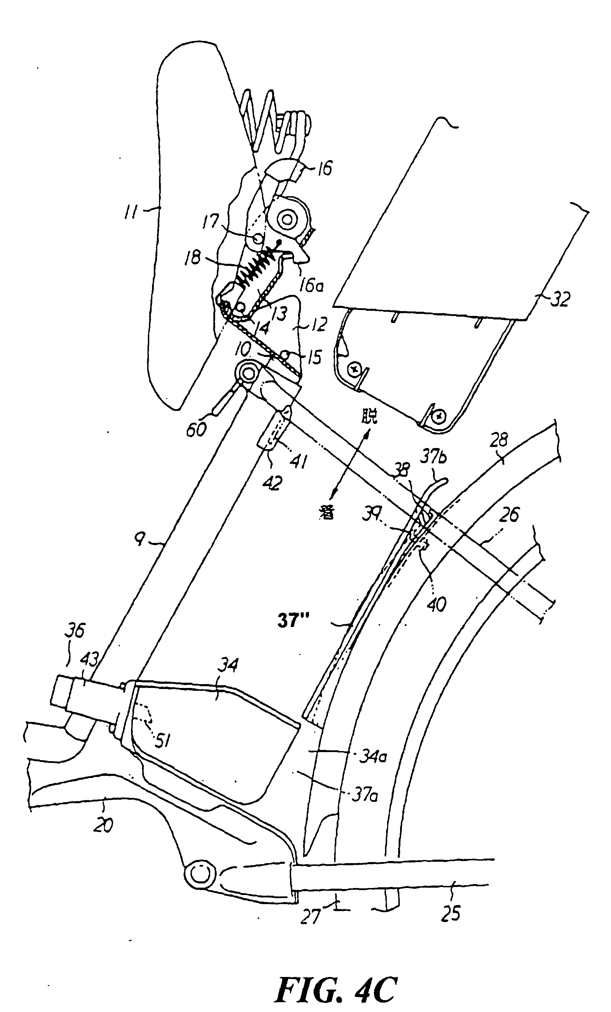

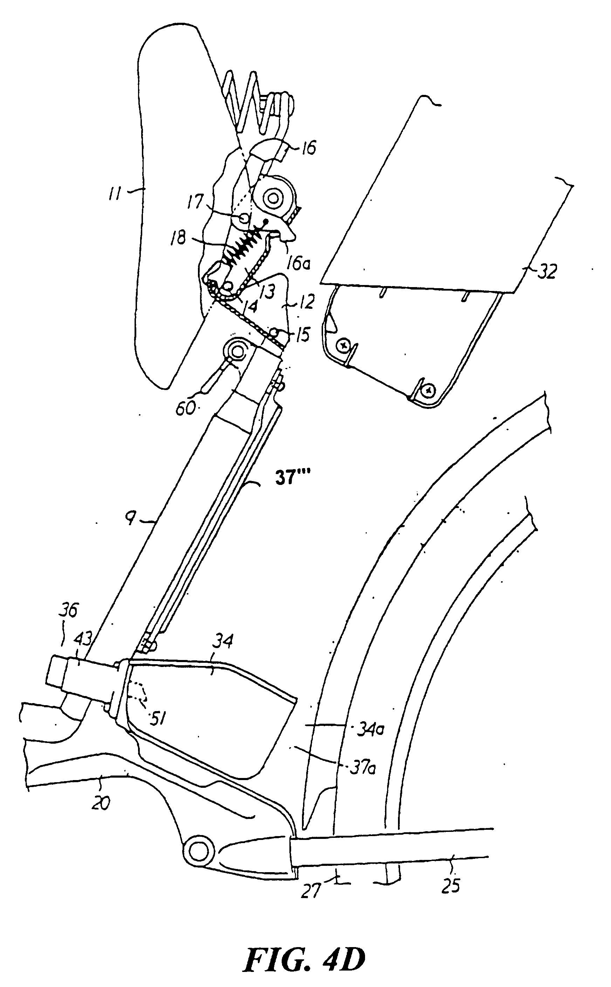

From the head pipe 2, a down tube 8 extends obliquely downward toward the rear of the vehicle body (to the right in FIG. 1). From the generally horizontally extending rear end part of the down tube 8, a seat tube 9 rises with a rearward tilt. A seat post 10 (Refer to FIGs. 3 and 4.) is fit and held in the seat tube 9 for height adjustment using a clamp 60. A seat 11 is supported for rotation at the upper end of the seat post 10.

Here, the structure for supporting the seat 11 will be described in reference to FIGs. 3 and 4.

To the upper end of the seat post 10 is connected a bracket 12 which supports a hinge member 13 for supporting the seat 11 and for rotation about a shaft 14 and has a projecting pin 15. To the hinge member 13 is attached an L-shaped lever 16 for rotation about a pivot shaft 17. The lever 16 is forced with a tension spring 18 in one direction.

The seat 11 in normal use is held in a horizontal state as shown in FIG. 3 with a fore-end detent portion 16a of the lever 16 engaging with the pin 15.

As shown in FIG. 1, a power unit 19 is supported through a sheet metal bracket 20 on the down tube 8 and the seat tube 9 in the lower central area of the vehicle body. The power unit 19 comprises a human power drive system and an electric motor drive system arranged in parallel to output resultant power in which the human power and the assist power are combined together. A rotatable crankshaft 21 is supported on the power unit 19. On right and left ends of the crankshaft 21 are attached right and left cranks 22 where pedals 23 are shaft-supported. An area where the down tube 8 and the seat tube 9 are joined together, and parts of the attachment bracket 20 and the power unit 19 are covered with a plastic cover 24. FIG. 1 also shows a controller 61 for controlling the electric motor power according to the magnitude of the human power.

From the attachment bracket 20, paired right and left chain stays 25 extend toward the rear of the vehicle body. The rear ends of the chain stays 25 are connected through paired right and left seat stays 26 to the upper end of the seat tube 9. A rear wheel 27 is supported for rotation at a position where the rear ends of the chain stays 25 are connected to the seat stays 26. Part of the rear wheel 27 is covered with a rear fender 28. The rear wheel 27 is provided with a wheel sprocket 29 associated with a drive sprocket (not shown) provided in the power unit 19 through an endless chain 30 girdling both of the sprockets. In the middle of the seat stays 26 is provided a wheel lock 31 for preventing theft by locking the rotation of the rear wheel 27. The front ends of the seat stays 26 are tightened together with the clamp 60.

In the electric motor-operated bicycle 1 of the present embodiment, a battery container 32 is removably installed in the space surrounded with the seat tube 9 and the rear fender 28 under the seat 11.

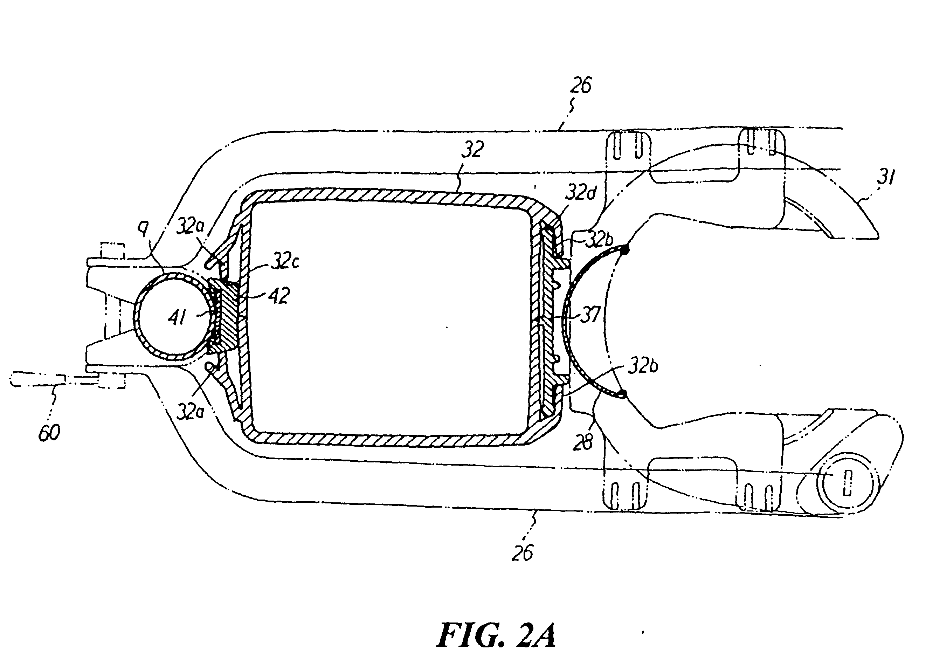

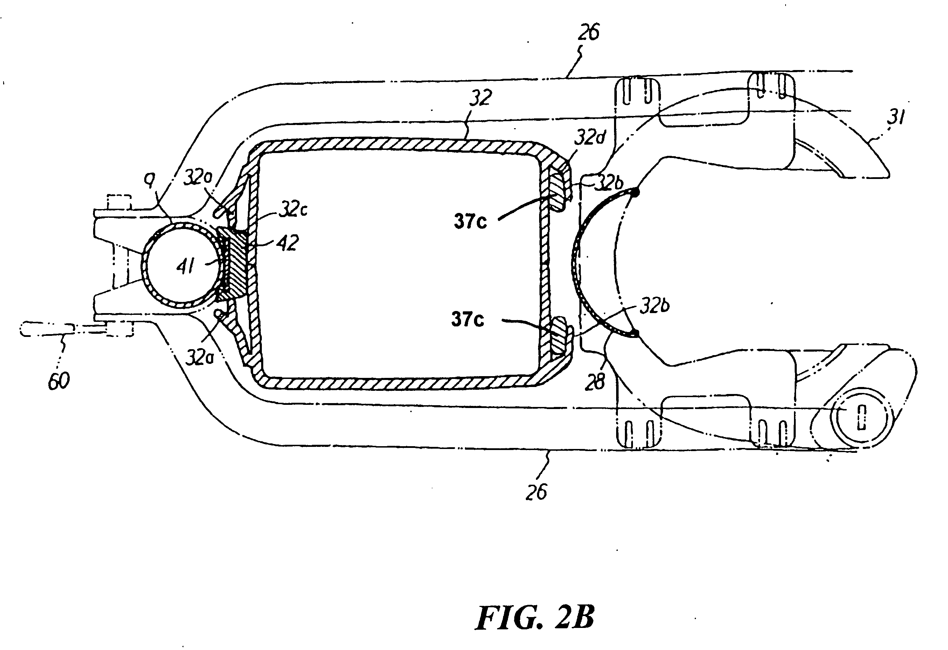

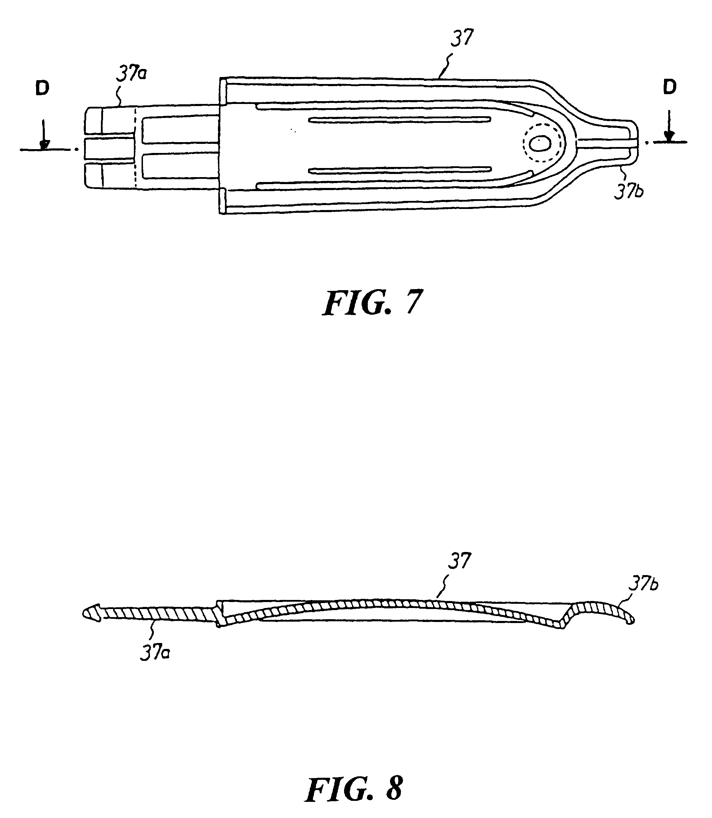

Now, the structure for installing and removing the battery container 32 will be described in detail below in reference to FIGs. 2 through 7.

As shown in FIG. 2, the battery container 32 comprises two, right and left split pieces made of a plastic material joined together to form a single, rectangular container 32 containing an Ni-Cd battery (not shown) made up of a plural number of shrink-packed single cells. As shown in FIG. 3, the upper part of the battery container 32 is provided with a handle 33 which may be erected or folded as required. The handle 33 is constituted, when folded, to cover the opening for charging. As shown in FIGs. 2 and 3, the front and rear end surfaces of the battery container 32 are provided with guiding grooves 32c and 32d formed with right and left ribs 32a and 32b running through in the vertical direction.

As shown in FIGs. 3 and 4, a portion of the top surface of the attachment bracket 20 facing the space surrounded with the seat tube 9 and the rear fender 28 is provided with a cup-shaped tray 34 secured with screws 35 screwed from inside the tray 34. The tray 34 is made of a plastic material as a single body. As shown in FIG. 3, part of the lower portion of the battery container 32 is installed in the tray 34.

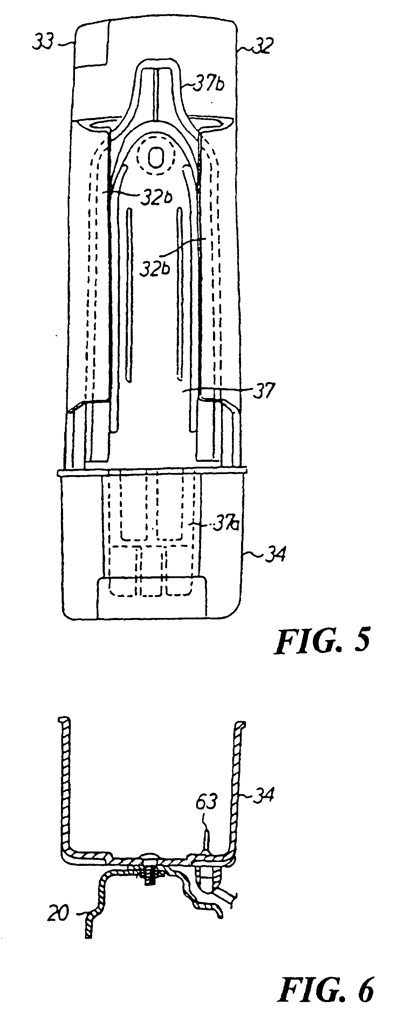

As shown in Figs. 3 and 6, discharge terminals 63 are erected in the tray 34 to be automatically connected to other discharge terminals (not shown) provided as recesses in the bottom surface of the battery container 32 upon inserting the battery container 32 into the tray 34.

As seen in Fig. 4A, the front end surface of the tray 34 is provided with locking mechanism 36.
The rear end surface of the tray 34 is provided with an insertion hole 34a running through in the vertical direction with a rectangular cross section elongate in the vehicle width direction. A lower end portion 37a of a guide member 37 of a plate shape having a width in the vehicle width direction formed with a soft plastic material such as polypropylene (PP) is inserted into the insertion hole 34a of the tray 34. The guide member 37 extends obliquely upward from the rear end portion of the tray 34 generally parallel to the seat tube 9 along the front face of the rear fender 28.

Figs. 4B to 4D show modifications for guide members. As seen in Fig. 4B a single rod is used as said guide member 37' having no lower end portion 37a. Said guide member 37' is fixed to the seat stay 26 and to the rear fender 28 via bolts 39 and nuts 40.

Fig. 4C is similar to Fig. 4B but only the upper part of a guide member 37" is fixed to the seat stay 26 and to the rear fender 28 via one bolt 39 and one nut 40.

Fig. 4D shows a modification with respect to the position a guide member is fixed. According to this modification a guide member 37''' is fastened to the seat tube 9.

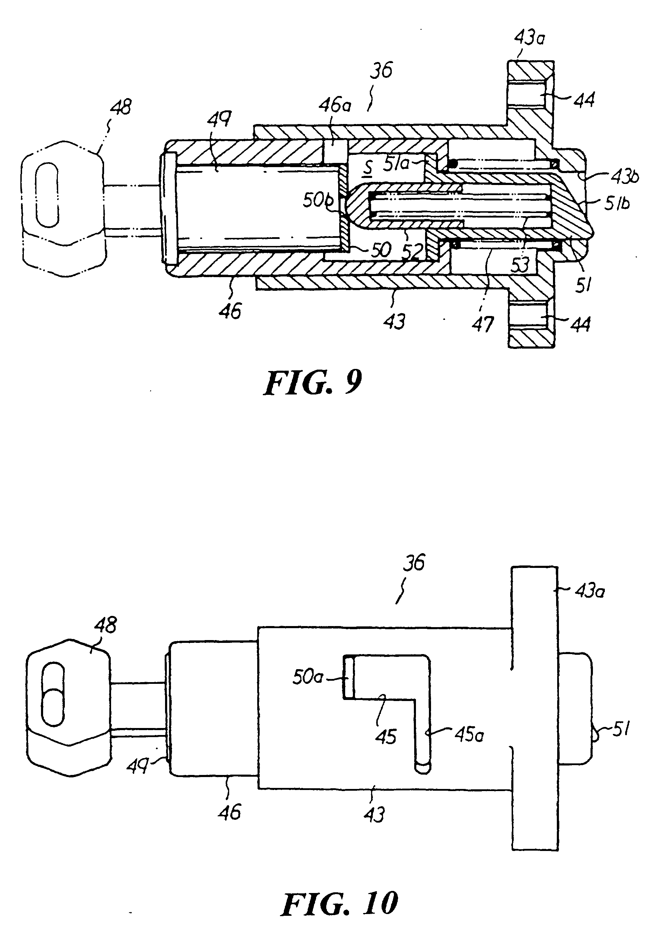

As shown in Figs. 4A to 4C and 9, the guide member 37 has a convex shape with its central portion with respect to the vehicle width direction curved forward. The upper end 37b of the guide member 37 is bent toward the rear of the vehicle to form a guiding portion. The upper part of the guide member 37 is secured to the set stay 26 together with the rear fender 28 through a metallic bracket 38 welded to the seat stay 26 using a screw 39 and a nut 40.

As shown in Fig. 4A to 4C, a space is formed behind the seat tube 9 surrounded with the tray 34 on the bottom side, and the seat tube 9 and the guide member 37 on the front and rear sides, and open on both right and left sides and on the top side. As shown in FIG. 3, the battery container 32 is installed in this space. In the state of the battery container 32 being installed as described above, the lower part of the battery container 32 is partially inserted into the tray 34. As shown in Figs. 4A to 4C, a metallic bracket 41 is welded to the upper rear surface of the seat tube 9. A guide member 42 made of a plastic material is fit into the bracket 41.

Next, detailed constitution of the locking mechanism 36 according to the invention will be described in reference to Figs. 9 and 10.

The locking mechanism 36 has a cylindrical lock body 43. The outer circumference at one end of the lock body 43 is formed with a flange 43a which is formed with two threaded holes 44. As shown in Fig. 10, an L-shaped engagement slot 45 is formed in the middle (with respect to the axial direction) part of the lock body 43. A cylinder 46 is inserted for sliding in the lock body 43 and urged toward left in Fig. 9 (in the direction of the cylinder 46 projecting from the lock body 43) with a large diameter compression spring 47 disposed between the cylinder 46 and the lock body 43. A cylindrical locking member 49 into which the key 48 is to be inserted is fit in the cylinder 46. As shown in Fig. 9, a space S is defined by the locking member 49 within the cylinder 46.

A planar engage-stop member 50 for interlocked movement with the rotating operation of the key 48 is disposed on the end surface, facing the space S, of the locking member 49. A stopper portion 50a (Refer to Fig. 10) of the engage-stop member 50 penetrates a slot 46a formed in the cylinder 46 and engages with the above-described engagement slot 45 formed in the lock body 43. As shown in Fig. 9, a round hole 50b is bored in the axial center of the engagement member 50.

A hollow detent 51 capable of sliding out of and into the lock body 43 through an opening 43b at one end of the lock body 43 is housed for sliding in the lock body 43. A flange portion 51a at one end of the detent 51 fits for sliding within the inner circumference of the cylinder 46. The other end of the detent 51 is fit and held for sliding at the opening 43b at one end of the lock body 43, and its end surface is formed as a sloped surface 51b. The detent 51 is forced toward the right as seen in Fig. 9 (in the direction of the detent 51 projecting from the opening 43b of the lock body 43) with a small diameter compression spring 53 interposed between the detent 51 and a spring holder 52. The end of the spring holder 52 is formed in a hemispherical shape for coming into contact with the round hole 50b portion of the engage-stop member 50.

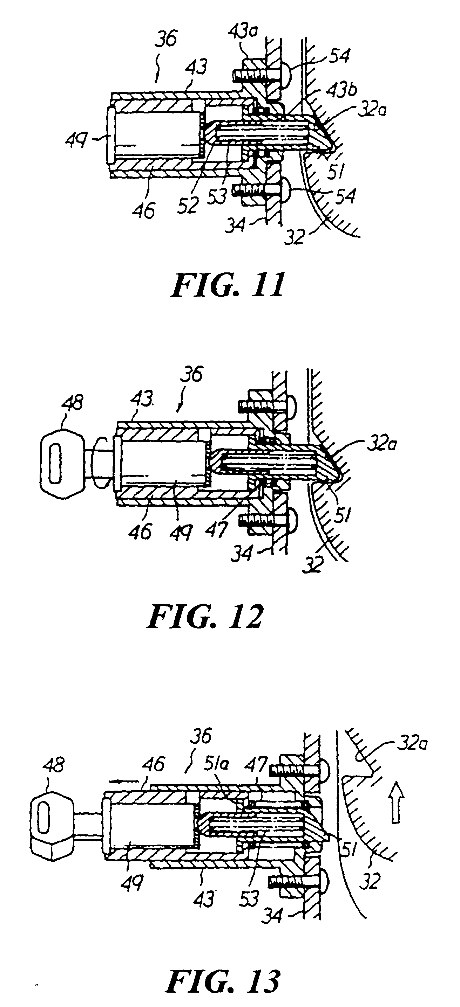

The locking mechanism 36 constituted as described above is attached as shown in Fig. 11 to the front face of the tray 34 with the flange portion 43a of the lock body 43 brought into contact with the front face of the tray 34 with screws 54 penetrating the tray 34 from inside into the threaded holes 44 (Refer to Fig. 9) formed in the flange portion 43a of the lock body 43. As the detent 51 slides out of and into the tray 34, the detent 51 engages with and disengages from the engagement groove 32a, and the battery container 32 is locked and unlocked with respect to the tray 34.

In the state of the battery container 32 being installed as shown in FIG. 3, the lower part of the battery container 32 is held with the tray 34. At the same time, as shown in Figs. 2A,B, the guide members 42 and 37 fit into the guide grooves 32c and 32d respectively formed on the front end surface and the rear end surface of the battery container 32. As shown in Fig s 3 and 11, in the state of the locking mechanism 36 being locked, the detent 51 engages with the engagement groove 32a of the battery container 32 to hold the battery container 32 in the state of engaging with the tray 34. As a result, the battery container 32 is secured with minimum play and therefore the battery container 32 is effectively prevented from being damaged by vibration.

When the locking mechanism 36 is in the locked state, the cylinder 46 is pushed into the lock body 43, and the detent 51 receives the pressing force of the cylinder 46 through the spring holder 52 and the spring 53. As a result, the detent 51 moves together with the cylinder 46, projects as shown in the drawing from the opening 43b of the lock body 43, engages with the engagement groove 32a of the battery container 32 to lock the installed state of the battery container 32.

In this locked state, the stopper portion 50a of the engage-stop member 50 shown in Fig. 10 is in engagement with the L-shaped portion 45a of the engagement slot 45.

In order to take out the battery container 32 for charging the battery, first the locking mechanism 36 is unlocked to release the battery container 32 from the installed state. That is to say, when the key 48 is turned in the arrow direction in Fig. 12, the engage-stop member 50 turns in the same direction and its stopper portion 50a comes off the L-shaped portion 45a of the engagement slot 45, and so the cylinder 46 is moved and projected from the lock body by the resilient force of the spring 47 43 as far as the stopper portion 50a comes into contact with the end surface of the engagement slot 45 as shown in Fig. 13. Then, since the flange portion 51a at one end of the detent 51 forced toward the right in Fig. 13 by the spring 53 is in contact with the cylinder 46, the detent 51 moves together with the cylinder 46 and disengages from the engagement groove 32a of the battery container 32.

Operation of turning the seat 11 forward as shown in Fig.s 4A to 4D for opening up the space over the battery container 32 either after or before unlocking the above-described locking mechanism 36 is carried out as follows.

That is to say, with the seat 11 in the normal position for use as shown in FIG. 3, when the lever 16 is pushed up against the urging force of the spring 18 to turn the lever 16 about the shaft 17 counterclockwise in FIG. 3. the detent portion 16a at the tip of the lever 16 disengages from the pin 15, permitting the seat 11 together with the hinge member 13 supporting the seat 11 to be turned about the shaft 14 counterclockwise to the position shown in Figs. 4A to 4D to open up the space over the battery container 32.

When the locking mechanism 36 is unlocked and the seat 11 is turned forward to open up the space over the battery container 32 as described above, the battery container 32 may be easily taken out by pulling up and gripping by hand the handle 32 provided at the top of the battery container 32 and drawing up the battery container 32 along the guide member 37. Here, since the guide groove 32c formed in the front face of the battery container 32 is also in sliding engagement with the guide member 42. The battery container 32 may be smoothly drawn up without rattling.

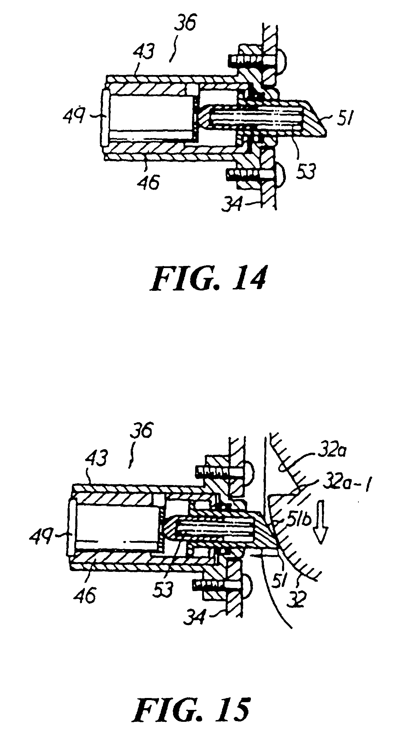

With the present embodiment, the key 48 cannot be drawn out of the locking member 49 when the locking mechanism 36 is in the unlocked state as shown in Fig. 13. Therefore, after taking out the battery container 32, a user locks the locking mechanism 36 by turning the key 48 after pushing in the cylinder 46 while inserting and holding the key 48. This permits the key 48 to be drawn out. Therefore, when the battery container 32 is taken out for charging the battery, the locking mechanism 36 is in the locked state as shown in FIG. 15. In this locked state, the detent 51 may be caused to slide independently against the urging force of the spring 53.

When the battery container 32 is to be replaced after completing charging the battery, in the state shown in Figs. 4A to 4D, the battery container 32 may be caused to slide down along the guide member 37 to partially fit the lower part of the battery container into the tray 34.

In other words, when the battery container 32 is pushed down along the guide member 37 with the rear face of the battery container 32 brought into contact with the upper end guide portion 37b of the guide member 37, the guide grooves 32c and 32d running through along the front and rear faces of the battery container 32 respectively engage with the guide members 42 and 37, and so the battery container 32 may be smoothly pushed down while being guided with the guide members 42 and 37 without rattling.

As shown in Fig. 15 when the lower end portion of the battery container 32 comes into contact with the fore-end sloped surface 51b of the detent 51 of the locking mechanism 36, the detent 51 which may be caused to slide independently against the urging force of the spring 53 as described above is slid to the left in Fig. 15 as the detent 51 receives a leftward force from the battery container 32 because of a wedge effect. As a result, the locking mechanism 36 is temporarily brought to the unlocked state and the inserting operation of the battery container 32 is carried on. At the point where the bottom surface 32a-1 of the engagement groove 32a of the battery container 32 passes the bottom surface of the detent 51, the force acting on the detent 51 is removed and so the detent 51 is pushed back to the original position by the urging force of the spring 53 and engages with the engagement groove 32a of the battery container 32 as shown. Thus, the locking mechanism 36 is again in the locked state in which the battery container 32 is locked in the state of being inserted in the tray 34.

With the present embodiment, the locking mechanism 36 in the locked state is temporarily brought to the unlocked state and then again to the locked state by simply installing the battery container 32 without any operation of the locking mechanism 36. Thus, the operation of installing the battery container 32 is significantly simplified.

As described above, in this embodiment, the conventional large-sized, closed type of outer box is not used. Instead, the small-sized tray 34 and the plate-shaped guide member 37 are used so that the battery container 32 is installed into and removed from the tray 34 by sliding the battery container 32 along the guide member 37. As a result, the battery container 32 may be smoothly installed into and removed from the vehicle body by the use of simple, small components. This reduces both size and cost of the battery installing-removing structure. Furthermore, since most of the exterior of the battery container is exposed to the outside as an external appearance component which is compact-sized, degree of freedom in styling design of the motor-operated bicycle is increased.

Furthermore, since the battery container 32 is installed in the space behind the seat tube 9, the installing and removing operations become easy and the battery container 32 does not hinder the riding and getting off movements of the rider.

As is clear from the above description, according to a preferred embodiment of the invention, the conventional large-sized outer box is not used. Instead a small-sized tray and a plate-shaped guide member are used so that the battery container is installed into and removed from the tray by sliding the battery container along the guide member. As a result, the following effects are provided: The battery container may be smoothly installed into and removed from the vehicle body by the use of simple, small components. This reduces both size and cost of the battery installing-removing structure. Furthermore, since most of the exterior of the battery container is exposed to the outside as an external appearance component which is compact-sized, degree of freedom in styling design of the motor-operated bicycle is increased.

According to another preferred embodiment of the invention, since the battery container is installed in the space behind the seat tube, such effects are provided that the installing and removing operations become easy and that the battery container does not hinder the riding and getting off movements of the rider.

According to a further preferred embodiment of the invention, the guide member fits into the guide groove formed on the rear end surface of the battery container. In this case, it may be advantageous when the guide formed on the front end surface of the battery container fits into the guide member provided on the seat tube. As a result, such effects are provided that the installing and removing operations of the battery container are made more easier along the guide member and the seat tube. At the same time, the battery container is secured more reliably once it is installed.

According to still a further preferred embodiment of the invention, the locking mechanism is unlocked by the installing action of the battery container locked again upon completion of the installing action and the installed state of the battery container to the tray is locked. This provides such effects that the battery container is secured more reliably with minimum looseness and that the battery is prevented from being damaged by vibration while the vehicle is running.

## Claims

1. An electric motor-operated bicycle (1) comprising a removably installable battery container (32) and a cup-shaped tray (34) into which a part of a lower portion of said battery container (34) is insertable, **characterized by** a guide means associated with said tray (34) and comprising a guide member (37,37c,42) for guiding and supporting said battery container (32) such that the battery container (32) is moved in sliding engagement along said guide member (37,37c,42) upon installing or removing said battery container (32) into or from said tray (34).

2. An electric motor-operated bicycle (1) according to claim 1, **characterized in that** said guide member is a two rod-like guide member (37c).

3. An electric motor-operated bicycle (1) according to claim 1, **characterized in that** said guide member is a plate-shaped guide member (37).

4. An electric motor-operated bicycle (1) according to claim 3, **characterized in that** said plate-shaped guide member (37) is connected to said tray (34).

5. An electric motor-operated bicycle (1) according to claim 4, **characterized in that** said plate-shaped guide member (37) is erected from said tray (34).

6. An electric motor-operated bicycle (1) according to at least one of the preceding claims 1 to 5, **characterized in that** said tray (34) and said guide means (37,37c) are located in a space behind a seat tube (9), and said battery container (32) is installable and removable along said guide means (37,37c) and said seat tube (9).

7. An electric motor-operated bicycle (1) according to claim 6, **characterized in that** said guide means (37,37c) is arranged along a rear fender (28) and generally parallel to said seat tube (9), and that said guide member (37) fits into a guide groove (32d) formed in a rear end surface of said battery container (32).

8. An electric motor-operated bicycle (1) according to at least one of the preceding claims 1 to 6, **characterized in that** said guide means (37,37c) is fastened to a seat tube (9) or to a rear fender (28).

9. An electric motor-operated bicycle (1) according to at least one of the preceding claims 1 to 8, **characterized in that** said guide member (42) fits into a guide groove (32c) formed in a front end surface of said battery container (32).

10. An electric motor-operated bicycle (1) according to at least one of the preceding claims 1 to 9, **characterized in that** said fastening means or tray (34) is made of a plastic material as a single body and that said guide means (37,37c) is made of plastic material.

11. An electric motor-operated bicycle (1) according to at least one of the preceding claims 1 to 10, **characterized in that** a rear end surface of said tray (34) is provided with an insertion hole (34a) into which a lower end portion (37a) of said guide means (37,37c) is insertable.

12. An electric motor-operated bicycle (1) according to at least one of the preceding claims 1 to 11, **characterized in that** said guide means (37,37c) being provided at a rear fender (28) and having a convex shape with its central portion, which is with respect to a bicycle width direction, curved forward.

13. An electric motor-operated bicycle (1) according to at least one of the preceding claims 7 to 12, **characterized in that** an upper end (37b) of said guide member (37) is bent toward a rear of said bicycle (1) and secured to said stay (26) together with said rear fender (28) through a metallic bracket (38) welded to a seat stay (26).

14. An electric motor-operated bicycle (1) according to at least one of the preceding claims 1 to 13, **characterized in that** a locking mechanism (36) is provided for said battery container (32) and that in its locked state said locking mechanism (36) is adapted to be temporarily unlocked by said battery container (32) during said installation of said battery container (32) and to be locked again after a completion of said installation of said battery container (32).

## Patentansprüche

1. Elektromotorbetätigtes Fahrrad (1), das einen entfernbar installierbaren Batteriebehälter (32) und eine tassenförmige Schale (34) aufweist, in die ein Teil eines unteren Abschnittes des Batteriebehälter (32) einsetzbar ist, **gekennzeichnet durch** eine Führungseinrichtung, die der Schale (34) zugeordnet ist und die ein Führungsteil (37, 37c, 42) zum Führen und Tragen des Batteriebehälters (32) aufweist, derart, dass der Batteriebehälter (32) im Gleiteingriff entlang des Führungsteiles (37, 37c, 42) während des Installierens oder Entfernens des Batteriebehälters (32) in oder aus der Schale (34) bewegt wird.

2. Elektromotorbetätigtes Fahrrad (1) nach Anspruch 1, **dadurch gekennzeichnet, dass** das Führungsteil ein zwei- stangenförmiges Führungsteil (37c) ist.

3. Elektromotorbetätigtes Fahrrad (1) nach Anspruch 1, **dadurch gekennzeichnet, dass** das Führungsteil ein plattenförmiges Führungsteil (37) ist.

4. Elektromotorbetätigtes Fahrrad (1) nach Anspruch 3, **dadurch gekennzeichnet, dass** das plattenförmige Führungsteil (37) mit der Schale (34) verbunden ist.

5. Elektromotorbetätigtes Fahrrad (1) nach Anspruch 4, **dadurch gekennzeichnet, dass** das plattenförmige Führungsteil (37) von der Schale (34) aufgerichtet ist.

6. Elektromotorbetätigtes Fahrrad (1) nach zumindest einem der vorhergehenden Ansprüche 1 bis 5, **dadurch gekennzeichnet, dass** die Schale (34) und die Führungseinrichtung (37, 37c) in einem Raum hinter einem Sitzrohr (9) platziert sind und der Batteriebehälter (32) entlang der Führungseinrichtung (37, 37c) und des Sitzrohres (9) installierbar oder entfembar sind.

7. Elektromotorbetätigtes Fahrrad (1) nach Anspruch 6, **dadurch gekennzeichnet, dass** die Führungseinrichtung (37, 37c) entlang eines hinteren Schutzbleches (28) und im Wesentlichen parallel zu dem Sitzrohr (9) angeordnet ist und dass das Führungsteil (37) in eine Führungsnut (32d) passt, gebildet in einer hinteren Endoberfläche des Batteriebehälters (32).

8. Elektromotorbetätigtes Fahrrad (1) nach zumindest einem der vorhergehenden Ansprüche 1 bis 6, **dadurch gekennzeichnet, dass** die Führungseinrichtung (37, 37c) an einem Sitzrohr (9) oder an einem hinteren Schutzblech (28) befestigt ist.

9. Elektromotorbetätigtes Fahrrad (1) nach zumindest einem der vorhergehenden Ansprüche 1 bis 8, **dadurch gekennzeichnet, dass** das Führungsteil (42) in eine Führungsnut (32c) passt, gebildet in einer vorderen Endoberfläche des Batteriebehälters (32).

10. Elektromotorbetätigtes Fahrrad (1) nach zumindest einem der vorhergehenden Ansprüche 1 bis 9, **dadurch gekennzeichnet, dass** die Befestigungseinrichtung oder Schale (34) aus einem Kunststoffmaterial als ein einzelner Körper hergestellt ist und dass die Führungseinrichtung (37, 37c) aus einem Kunststoffmaterial hergestellt ist.

11. Elektromotorbetätigtes Fahrrad (1) nach zumindest einem der vorhergehenden Ansprüche 1 bis 10, **dadurch gekennzeichnet, dass** eine hintere Endoberfläche der Schale (34) mit einer Einsetzbohrung (34a) versehen ist, in die ein unterer Endabschnitt (37a) der Führungseinrichtung (37, 37c) einsetzbar ist.

12. Elektromotorbetätigtes Fahrrad (1) nach zumindest einem der vorhergehenden Ansprüche 1 bis 11, **dadurch gekennzeichnet, dass** die Führungseinrichtung (37, 37c) an einem hinteren Schutzblech (28) vorgesehen ist und eine konvexe Form hat, wobei ihr Mittelabschnitt, der in Bezug auf die Richtung einer Breite des Fahrrades so bezeichnet ist, nach vom gekrümmt ist.

13. Elektromotorbetätigtes Fahrrad (1) nach zumindest einem der vorhergehenden Ansprüche 7 bis 12, **dadurch gekennzeichnet, dass** ein oberes Ende (37b) des Führungsteils (37) in die Richtung nach hinten des Fahrrades (1) gebogen ist und an der Schale (26) gemeinsam mit dem hinteren Schutzblech (28) durch einen Metallhalter (38), verschweißt an einer Sitzstrebe (26), befestigt ist.

14. Elektromotorbetätigtes Fahrrad (1) nach zumindest einem der vorhergehenden Ansprüche 1 bis 13, **dadurch gekennzeichnet, dass** eine Verriegelungsvorrichtung (36) für den Batteriebehälter (32) vorgesehen ist und dass in seinem Verriegelungszustand die Verriegelungsvorrichtung (36) vorgesehen ist, zeitweise durch den Batteriebehälter (32) während der Installation des Batteriebehälters (32) nicht verriegelt zu sein und nach einer Beendigung der Installation des Batteriebehälters (32) wieder verriegelt zu sein.

## Revendications

1. Bicyclette actionnée par un moteur électrique (1) comprenant un conteneur de batterie installable de manière amovible (32) et un plateau en forme de coupe (34) dans lequel une partie d'une partie inférieure dudit conteneur de batterie (34) est insérable, **caractérisée par** un moyen de guidage associé audit plateau (34) et comprenant un élément de guidage (37, 37c, 42) pour guider et soutenir ledit conteneur de batterie (32) de telle manière que ledit conteneur de batterie (32) soit déplacé en prise coulissante le long dudit élément de guidage (37, 37c, 42) lors de l'installation ou l'enlèvement dudit conteneur de batterie (32) dans ou depuis ledit plateau (34).

2. Bicyclette actionnée par un moteur électrique (1) selon la revendication 1, **caractérisée en ce que** ledit élément de guidage est un élément de guidage de type à deux tiges (37c).

3. Bicyclette actionnée par un moteur électrique (1) selon la revendication 1, **caractérisée en ce que** ledit élément de guidage est un élément de guidage en forme de plaque (37).

4. Bicyclette actionnée par un moteur électrique (1) selon la revendication 3, **caractérisée en ce que** ledit élément de guidage en forme de plaque (37) est raccordé audit plateau (34).

5. Bicyclette actionnée par un moteur électrique (1) selon la revendication 4, **caractérisée en ce que** ledit élément de guidage en forme de plaque (37) est érigé depuis ledit plateau (34).

6. Bicyclette actionnée par un moteur électrique (1) selon au moins l'une des revendications précédentes 1 à 5, **caractérisée en ce que** ledit plateau (34) et ledit moyen de guidage (37, 37c) sont situés dans un espace derrière un tube de selle (9), et ledit conteneur de batterie (32) est installable et amovible le long dudit moyen de guidage (37, 37c) et dudit tube de selle (9).

7. Bicyclette actionnée par un moteur électrique (1) selon la revendication 6, **caractérisée en ce que** ledit moyen de guidage (37, 37c) est agencé le long d'un garde-boue arrière (28) et généralement parallèle audit tube de selle (9), et **en ce que** ledit élément de guidage (37) est ajusté dans une rainure de guidage (32d) formée dans une surface d'extrémité arrière dudit conteneur de batterie (32).

8. Bicyclette actionnée par un moteur électrique (1) selon au moins l'une des revendications précédentes 1 à 6, **caractérisée en ce que** ledit élément de guidage (37, 37c) est fixé à un tube de selle (9) ou un garde-boue arrière (28).

9. Bicyclette actionnée par un moteur électrique (1) selon au moins l'une des revendications précédentes 1 à 8, **caractérisée en ce que** ledit élément de guidage (42) est ajusté dans une rainure de guidage (32c) formée dans une surface d'extrémité avant dudit conteneur de batterie (32).

10. Bicyclette actionnée par un moteur électrique (1) selon au moins l'une des revendications précédentes 1 à 9, **caractérisée en ce que** ledit moyen de fixation ou plateau (34) est constitué d'un matériau plastique sous la forme d'un corps individuel et **en ce que** ledit moyen de guidage (37, 37c) est constitué de matériau plastique.

11. Bicyclette actionnée par un moteur électrique (1) selon au moins l'une des revendications précédentes 1 à 10, **caractérisée en ce qu'**une surface d'extrémité arrière dudit plateau (34) est pourvue d'un trou d'insertion (34a) dans lequel une partie d'extrémité inférieure (37a) dudit moyen de guidage (37, 37c) est insérable.

12. Bicyclette actionnée par un moteur électrique (1) selon au moins l'une des revendications précédentes 1 à 11, **caractérisée en ce que** ledit moyen de guidage (37, 37c) étant disposé au niveau d'un garde-boue arrière (28) et ayant une forme convexe avec sa partie centrale, est, par rapport à la direction de la largeur de la bicyclette, courbé vers l'avant.

13. Bicyclette actionnée par un moteur électrique (1) selon au moins l'une des revendications précédentes 7 à 12, **caractérisée en ce qu'**une extrémité supérieure (37b) dudit élément de guidage (37) est fléchie vers l'arrière de ladite bicyclette (1) et fixée audit hauban (26) conjointement avec ledit garde-boue arrière (28) par l'intermédiaire d'un support métallique (38) soudé audit hauban (26).

14. Bicyclette actionnée par un moteur électrique (1) selon au moins l'une des revendications précédentes 1 à 13, **caractérisée en ce qu'**un mécanisme de verrouillage (36) est prévu pour ledit conteneur de batterie (32) et **en ce que** dans son état verrouillé, ledit mécanisme de verrouillage (36) est adapté de manière à être temporairement déverrouillé par ledit conteneur de batterie (32) durant ladite installation dudit conteneur de batterie (32) et être verrouillé à nouveau après la fin de ladite installation dudit conteneur de batterie (32).
